# EUROPEAN PATENT APPLICATION

(11) **EP 3 318 765 A1**
(43) Date of publication of application: **09.05.2018**
(21) Application number: 17199682.0
(22) Date of filing: 02.11.2017
(51) Int. Cl.: F04D 29/041, F04D 29/046, F04D 13/06, F16C 23/04

(54) **ELECTRIC PUMP WITH TILT BEARING**

(30) Priority: 07.11.2016 JP 2016217407
(71) Applicant: AISIN SEIKI KABUSHIKI KAISHA, Kariya-shi Aichi 448-8650 (JP)
(72) Inventor: Ogawa, Hiroomi, Kariya-shi, Aichi 448-8650 (JP)
(74) Representative: Kramer Barske Schmidtchen Patentanwälte PartG mbB

(57) **Abstract**

An electric pump (P) includes: a casing (1); a shaft member (2) whose one end portion (2a) is fixed to the casing; first and second bearing portions (8a, 8b) disposed to an outer circumferential side of the shaft member at positions close to the one end portion of the shaft member and the other end portion (2b) of the shaft member, respectively; a rotor (3) accommodated in the casing and integrally rotating with the first and second bearing portions; an impeller (4) fixed to the rotor at a position close to the other end portion; an impeller housing (5) connected to the casing in a state where the other end portion is inserted into the impeller housing and accommodating the impeller; and a slide-contacting member (9) disposed between the impeller housing and the second bearing portion and coming into slide-contact with the second bearing portion.

## Description

### TECHNICAL FIELD

This disclosure relates to an electric pump including a bearing that is disposed close to an outer circumferential side of a shaft member and integrally rotates with a rotor.

### BACKGROUND DISCUSSION

In the related art, an electric pump including a bearing that is insert-molded into a rotor using resin (for example, refer to JP 2004-225581A (Reference 1) and JP 2016-42766A (Reference 2)). In an electric pump in Reference 1, a bearing is divided into two parts along an axis of a shaft member (in Reference 1, a fixed shaft) and the two parts are disposed over the entire area in which the shaft member and a rotor (in Reference 1, a rotor unit) face each other in a state where the two members are in close contact with each other.

In an electric pump in Reference 2, one end portion of a shaft member (in Reference 2, a rotation shaft) is fixed to a casing (in Reference 2, a motor housing) that accommodates a rotor and a resin bearing is insert-molded into the rotor over an area from the one end portion fixed to the casing and the other end portion of the shaft member. In addition, an impeller is fixed to the rotor at a position close to the other end portion of the shaft member and the other end portion of the shaft member is inserted into a recess of an impeller housing (in Reference 2, a pump case) in a state where a washer, with which the bearing comes into slide-contact, is mounted on an outer circumferential portion of the shaft member. Furthermore, the casing and the impeller housing are connected to each other in a state where a rib formed on a flange portion of the impeller housing is inserted into a rib accommodation recess formed on a flange portion of the casing.

Incidentally, in order to cause axes of the rotor and the shaft member to coincide with each other as accurately as possible, a clearance between the bearing and the shaft member is set to be small. Meanwhile, the casing and the impeller housing are connected to each other by fixing the rib accommodation recess and the rib described in Reference 2 through welding or by bolting the casing and the impeller housing. Therefore, there is a possibility of an assembling error. In a case where the impeller housing is fixed being inclined with respect to the casing due to the assembling error, the bearing comes into partial contact with the washer and smooth rotation of the rotor is inhibited since inclination of the bearing with respect to the shaft member is limited due to the small clearance between the bearing and the shaft member.

Particularly, in a case where a long bearing is provided in an area in which the shaft member and the rotor face each other as in the electric pump of the related art, the bearing comes into partial contact with the washer even if an inclination angle of the bearing with respect to the shaft member is extremely small and the assembling error is minute. Setting the length of the bearing to be small is also conceivable but this results in deterioration in bearing function.

Thus, a need exists for an electric pump, with which it is possible to secure a desired bearing function and to cause a rotor to rotate smoothly even if there is a slight assembling error.

### SUMMARY

A feature of an electric pump according to an aspect of this disclosure resides in that the electric pump includes a casing, a shaft member whose one end portion is fixed to the casing, a first bearing portion that is disposed to an outer circumferential side of the shaft member at a position close to the one end portion of the shaft member, a second bearing portion that is disposed to the outer circumferential side of the shaft member at a position close to the other end portion of the shaft member, a rotor that is accommodated in the casing and integrally rotates with the first bearing portion and the second bearing portion, an impeller that is fixed to the rotor at a position close to the other end portion of the shaft member, an impeller housing that is connected to the casing in a state where the other end portion of the shaft member is inserted into the impeller housing and that accommodates the impeller, and a slide-contacting member that is disposed between the impeller housing and the second bearing portion and comes into slide-contact with the second bearing portion, in which the second bearing portion includes an outer circumferential portion that abuts onto an inner circumferential surface of the rotor in a state of being able to tilt with respect to a rotation axis of the rotor and a plane portion that comes into slide-contact with an end surface of the slide-contacting member.

According to this configuration, the second bearing portion that comes into slide-contact with the slide-contacting member integrally rotates with the rotor and the second bearing portion abuts onto the inner circumferential surface of the rotor in a state of being able to tilt with respect to the rotation axis of the rotor. Therefore, even in a case where there is an assembling error of the casing and the impeller housing, the second bearing portion is aligned while tilting with respect to the rotor such that the plane portion of the second bearing portion comes into surface contact with the end surface of the slide-contacting member. As a result, the second bearing portion does not come into partial contact with the slide-contacting member and smooth rotation of the rotor can be realized.

Furthermore, since the impeller sucks and discharges fluid, a buoyant force acts on the rotor. Therefore, a state in which the second bearing portion is in surface contact with the slide-contacting member is maintained and thus it is possible to exhibit an ideal bearing function. In this manner, it is possible to provide an electric pump with which it is possible to secure a desired bearing function and to cause a rotor to rotate smoothly even if there is a slight assembling error.

Another feature resides in that at least one of the inner circumferential surface of the rotor and the outer circumferential portion of the second bearing portion is configured as a curved surface.

In a case where any one of the inner circumferential surface of the rotor and the outer circumferential portion of the second bearing portion is configured as a curved surface as in this configuration, an abutting area between the inner circumferential surface of the rotor and the outer circumferential portion of the second bearing portion is configured of a line segment extending in a circumferential direction. As a result, the second bearing portion tilts with respect to the rotor in a stable state. Therefore, it is possible to align the second bearing portion and to exhibit a desired bearing function without inhibiting rotation of the rotor.

Another feature resides in that the first bearing portion is configured as a bearing member that is insert-molded into the rotor using resin, and a resin portion that is exposed between the first bearing portion and the second bearing portion is positioned radially outward of inner circumferential surfaces of the first bearing portion and the second bearing portion.

In a case where the first bearing portion is subject to insert molding as in this configuration, since the first bearing portion is firmly fixed to the rotor, the first bearing portion is not separated from the rotor. Meanwhile, since the second bearing portion is configured such that the outer circumferential portion of the second bearing portion abuts onto the inner circumferential surface of the rotor in a state of being able to tilt, the second bearing portion can be mounted on the rotor after the insert molding. As a result, it is easy to form the resin portion that retreats radially outwards between the first bearing portion and the second bearing portion in comparison with a case where the second bearing portion is subject to insert molding. Furthermore, in a case where the resin portion is formed to retreat radially outwards between the first bearing portion and the second bearing portion, the resin portion does not come into slide-contact with the shaft member and thus it is possible to reliably exhibit a bearing function with the first bearing portion and the second bearing portion without inhibiting rotation of the rotor.

Another feature resides in that the first bearing portion abuts onto the inner circumferential surface of the rotor in a state of being able to tilt with respect to the rotation axis of the rotor.

In a case where the first bearing portion is configured to be able to tilt with respect to the rotor as in this configuration, a favorable slide-contacting state between the first bearing portion and the shaft member is maintained even in a case where the rotor is inclined with respect to the shaft member and thus it is possible to secure a desired bearing function.

Another feature resides in that a discharging groove is formed on the plane portion of the second bearing portion to extend radially outwards from the shaft member.

In a case where the discharging groove is formed on the plane portion of the second bearing portion as in this configuration, it is possible to guide powders or the like generated due to sliding friction between the shaft member and the second bearing portion in a radially outward direction and thus it is possible to secure a desired bearing function.

Another feature resides in that a plurality of rotation stopping projections are formed on the outer circumferential portion of the second bearing portion at regular intervals in a circumferential direction of the shaft member and rotation stopping groove portions that engage with the rotation stopping projections are formed on the inner circumferential surface of the rotor that abuts onto the outer circumferential portion.

In a case where the rotation stopping projections are configured to engage with the rotation stopping groove portions as in this configuration, the second bearing portion can integrally rotate with the rotor such that the second bearing can tilt while abutting onto the rotor and thus it is possible to exhibit a desired bearing function.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view of an electric pump;
Fig. 2 is an enlarged sectional view illustrating a rotor, a bearing, and a shaft member;
Fig. 3 is an exploded sectional view of a slide-contacting member, a second bearing portion, and the rotor as seen from an impeller side;
Fig. 4 is an exploded sectional view of as seen from a side opposite to that in Fig. 3;
Fig. 5 is an enlarged sectional view of a rotor, a bearing portion, and a shaft member according to Other Embodiment 1;
Fig. 6 is a perspective view of a second bearing portion according to Other Embodiment 2; and
Fig. 7 is a perspective view of a second bearing portion according to Other Embodiment 3.

### DETAILED DESCRIPTION

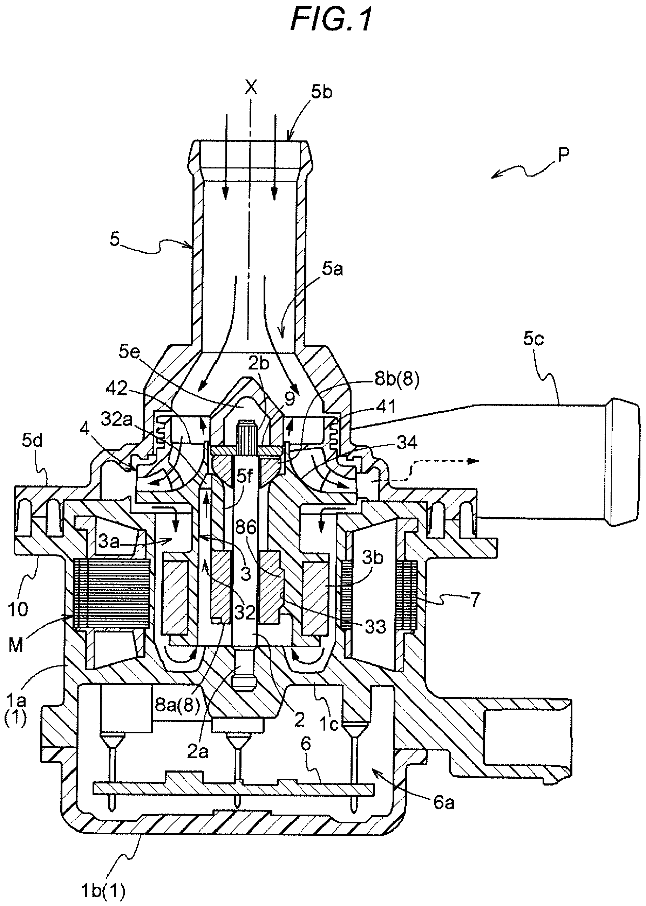

Hereinafter, an embodiment of an electric pump according to the disclosure will be described based on drawings. In the embodiment, a water pump P for a vehicle that circulates cooling water will be described as an example of the electric pump. The present disclosure is not limited to the following embodiment and various modifications can be made without departing from the gist of the disclosure. Hereinafter, an impeller 4 side (the upper side in Fig. 1) in a longitudinal direction of a rotor 3 in Fig. 1 (a vertical direction in Fig. 1) will be referred to as a front side and a side opposite to the impeller 4 side (the lower side in Fig. 1) will be referred to as a rear side.

As illustrated in Fig. 1, the water pump P includes a casing 1, a shaft member 2 whose rear end portion 2a (one end portion) is fixed to the casing 1, the rotor 3 that rotates around a rotation axis X at a position close to an outer circumferential side of the shaft member 2, the impeller 4 fixed to a flange-shaped tip end portion 34 (a front end portion) of the rotor 3, and an impeller housing 5 that accommodates the impeller 4. The water pump P is configured such that the impeller 4 sucks or discharges cooling water when the rotor 3 rotates due to a driving force from the electric motor M. For example, the water pump P circulates cooling water in an inverter or circulates cooling water between an engine and a radiator. The electric motor M in the embodiment is configured as a three-phase brushless motor that includes the rotor 3 that rotates around the rotation axis X and a stator 7 that generates a magnetic flux with respect to the rotor 3.

The casing 1 includes a resin-made motor housing 1a that forms a rotor chamber 3a rotatably accommodating the rotor 3 and a resin-made lid case 1b that forms a driver chamber 6a accommodating a circuit board 6. The motor housing 1a is integrally formed with a partition wall 1c that separates the rotor chamber 3a and the driver chamber 6a from each other. The rear end portion 2a of the shaft member 2 is fixed into the partition wall 1c while being insert-molded. In addition, the stator 7 that is disposed to surround a radially outer side of the rotor 3 is insert-molded into the motor housing 1a.

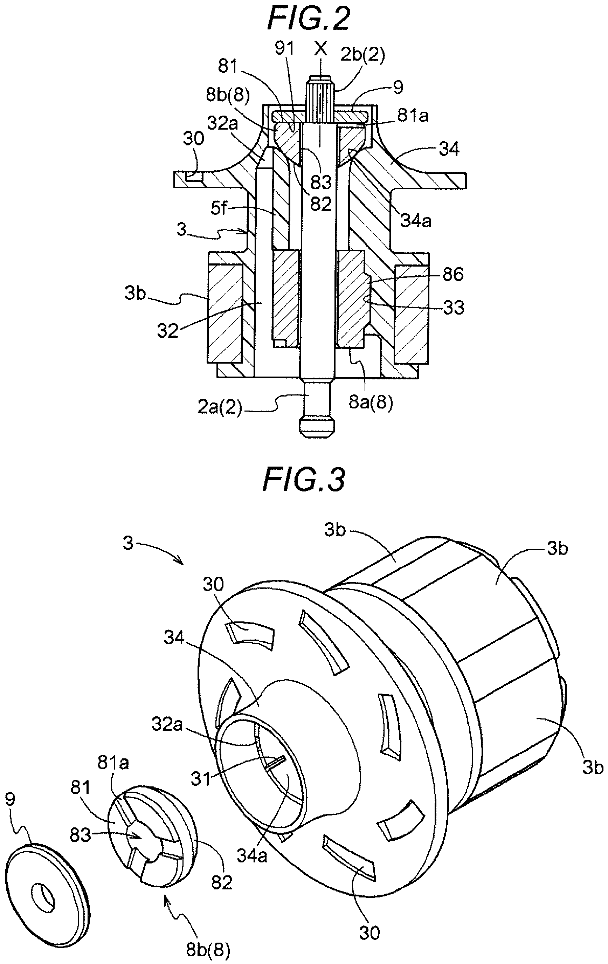

A plurality of permanent magnets 3b that face the stator 7 are insert-molded into the rotor 3 using resin. In the embodiment, the permanent magnets 3b are 6-pole magnets and the electric motor M is a 6-pole 3-phase 9-slot motor. In addition, a plurality of inclined grooves 30, each of which is inclined with respect to a circumferential direction, are formed on the tip end portion 34 of the rotor 3 and each of the inclined grooves 30 is formed to have a rectangular shape such that the impeller 4 is fixed thereto through vibration welding or the like (refer to Fig. 3).

A bearing 8 that integrally rotates with the rotor 3 is disposed between the rotor 3 and the shaft member 2. In the embodiment, an engine control unit (ECU) in a vehicle (not shown) controls an electric current to a coil (not shown) wound on the stator 7 such that the permanent magnets 3b of the rotor 3 receive an alternating magnetic field and the rotor 3 and the bearing 8 integrally rotate with each other. When the rotor 3 and the bearing 8 integrally rotate with each other, the impeller 4 fixed to the tip end portion 34 of the rotor 3 also rotates. The impeller 4 includes a plurality of curved blade members 42 inside a shroud 41 and is covered with the resin-made impeller housing 5.

As illustrated in Fig. 2, the bearing 8 in the embodiment is disposed close to the outer circumferential side of the shaft member 2, a first bearing portion 8a is formed close to the rear end portion 2a of the shaft member 2 and a second bearing portion 8b is formed close to a front end portion 2b (the other end portion) of the shaft member 2. The bearing 8 comes into slide-contact with the shaft member 2 and is formed of a material that is high in friction resistance or heat resistance. For example, the bearing 8 is configured as a carbon bearing that is formed of composite material of carbon fiber and resin or is formed of only carbon. The material of the bearing 8 is not particularly limited as long as the material is high in friction resistance or heat resistance and the bearing 8 may be formed of metal such as aluminum, for example.

The first bearing portion 8a is configured as a cylindrical bearing member that is insert-molded into the rotor 3 using resin. In addition, the rotor 3 is configured such that a resin portion 5f is exposed between the first bearing portion 8a and the second bearing portion 8b in a direction along the rotation axis X. The resin portion 5f is positioned radially outward of inner circumferential surfaces of the first bearing portion 8a and the second bearing portion 8b. That is, the resin portion 5f is positioned at an intermediate position in the direction along the rotation axis X and is not used as a slide-contacting portion of the bearing 8. In a case where the resin portion 5f is configured to retreat radially outwards, the resin portion 5f does not come into slide-contact with the shaft member 2 and thus it is possible to reliably exhibit a bearing function with the first bearing portion 8a and the second bearing portion 8b without inhibiting rotation of the rotor 3. In addition, on an outer circumferential surface of the first bearing portion 8a, a plurality of (in the embodiment, three) projecting portions 86, each of which is surrounded by insert molding resin of the rotor 3, are provided at regular intervals in a circumferential direction. Relative rotation of the first bearing portion 8a and the rotor 3 is regulated with the projecting portions 86 and inner surface recesses 33 of the rotor 3 being in close contact and thus the first bearing portion 8a and the rotor 3 integrally rotate with each other.

As illustrated in Figs. 2 to 4, the second bearing portion 8b is configured to have a truncated cone-like shape including a plane portion 81 that is formed on the bottom portion and a curved surface portion 82 (an example of an outer circumferential portion) having a curved side surface. In addition, the second bearing portion 8b is provided with a through hole 83 that is formed to penetrate the center of the second bearing portion 8b and the shaft member 2 is inserted into the through hole 83. On the plane portion 81, a plurality of discharging grooves 81 a through which a foreign substance can be discharged are formed to extend radially outwards from the through hole 83 (in the embodiment, three discharging grooves are formed at regular intervals). The discharging grooves 81a are paths guiding carbon powders or the like generated due to sliding friction between the shaft member 2 and the bearing 8 in a radially outward direction.

The plane portion 81 is disposed to face a washer 9 which will be described later and comes into slide-contact with an end surface 91 of the washer 9. On the curved surface portion 82, a plurality of (in the embodiment, three) rotation stopping projections 82a, each of which extends in the direction along the rotation axis X, are formed at regular intervals in the circumferential direction. Since the rotation stopping projections 82a engage with rotation stopping groove portions 31 formed on an inner circumferential surface 34a of the tip end portion 34 of the rotor 3, the second bearing portion 8b integrally rotates with the rotor 3. In addition, the second bearing portion 8b is configured to be able to tilt with respect to the rotation axis X of the rotor 3 with the curved surface portion 82 abutting onto the inner circumferential surface 34a of the tip end portion 34 of the rotor 3. Each of the inner diameter of the through hole 83 of the second bearing portion 8b and the outer diameter of the shaft member 2 is set such that the second bearing portion 8b tilts until the plane portion 81 of the second bearing portion 8b and the end surface 91 of the washer 9 comes into surface contact with each other. That is, the inner diameter of the through hole 83 is set to be larger than the outer diameter of the shaft member 2. In the embodiment, the inner circumferential surface 34a of the rotor 3 that abuts onto the curved surface portion 82 of the second bearing portion 8b is also formed into a curved surface. Note that, any one of the side surface of the second bearing portion 8b and the inner circumferential surface 34a of the tip end portion 34 of the rotor 3 may be configured as a curved surface and the other one of the side surface of the second bearing portion 8b and the inner circumferential surface 34a of the tip end portion 34 of the rotor 3 may be configured as a tapered surface.

As illustrated in Fig. 1, in the rotor 3, a discharging path 32 through which a foreign substance mixed in cooling water is discharged is formed in the direction along the rotation axis X in a state of being in contact with outer surfaces of the first bearing portion 8a and the second bearing portion 8b. In addition, an outlet 32a of the discharging path 32 is provided closer to the center of the shaft member 2 than the blade members 42 of the impeller 4. The outlet 32a also functions as a so-called balancing hole for releasing the pressure of fluid in the casing 1 toward the impeller 4 side.

The impeller housing 5 includes a pump chamber 5a that accommodates the impeller 4, a suction port 5b through which cooling water is suctioned into the pump chamber 5a, and a discharging port 5c through which cooling water is discharged from the pump chamber 5a. The suction port 5b and the discharging port 5c are formed to intersect each other. When the impeller 4 rotates in accordance with rotation of the rotor 3, cooling water spirally flows toward an outer circumferential side of the impeller 4 from the suction port 5b. At this time, most of cooling water is fed to the outside through the discharging port 5c while a portion of the cooling water flows out from a position close to the outer circumferential side of the impeller 4, circulates in the casing 1, passes through the discharging path 32, and is discharged through the discharging port 5c after circulating in the casing 1. When a portion of cooling water circulates in the casing 1 in this manner, the rotor 3, the stator 7, and the like is cooled and a foreign substance mixed in cooling water is discharged.

In addition, the impeller housing 5 is provided with an annual flange portion 5d that is formed to protrude radially outwards. The impeller housing 5 and the motor housing 1a are fixed to each other through welding (spin welding) using friction heat by rotating the impeller housing 5 in a state where a flange portion 5d faces the flange portion 10 of the motor housing 1a. Note that, a method of fixing the impeller housing 5 and the motor housing 1a to each other is not limited to spin welding and the impeller housing 5 and the motor housing 1a may be fixed to each other by being bolted to each other, or the like.

The circular plane plate-shaped washer 9 (an example of a slide-contacting member) is disposed between the impeller housing 5 and the second bearing portion 8b and the washer 9 is mounted onto the front end portion 2b of the shaft member 2 in a rotation stopping state and includes the planar end surface 91 that abuts onto the second bearing portion 8b. In addition, the front end portion 2b of the shaft member 2 is inserted into a recess 5e of the impeller housing 5 with a predetermined gap provided therebetween.

Incidentally, there is a case where the impeller housing 5 is fixed to the motor housing 1a while being slightly inclined with respect to the motor housing 1a when the impeller housing 5 and the motor housing 1a are subject to spin welding. In a case where there is an assembling error of the impeller housing 5 and the motor housing 1a in this manner, when the bearing 8 comes into partial contact with the washer 9, smooth rotation of the rotor 3 is inhibited and there is a decrease in durability due to wear of the bearing 8 or the washer 9.

In this regard, as illustrated in Figs. 1 to 4, the second bearing portion 8b in the embodiment is configured as a separated member without integrally molded with the rotor 3 and the second bearing portion 8b abuts onto the inner circumferential surface 34a of the rotor 3 in a state of being able to tilt with respect to the rotation axis X of the rotor 3. Therefore, even in a case where there is an assembling error of the impeller housing 5 and the motor housing 1a, the second bearing portion 8b is aligned while tilting with respect to the rotor 3 such that the plane portion 81 of the second bearing portion 8b comes into surface contact with the end surface 91 of the washer 9. As a result, the second bearing portion 8b does not come into partial contact with the washer 9, smooth rotation of the rotor 3 is realized, and it is possible to increase the durability of the bearing 8 and the washer 9.

Furthermore, since the impeller 4 sucks and discharges cooling water and cooling water circulates in the casing 1, a buoyant force acts on the rotor 3 such that the rotor 3 moves toward the washer 9. Therefore, a state in which the second bearing portion 8b is in surface contact with the washer 9 is maintained and thus it is possible to exhibit an ideal bearing function.

In addition, since the curved surface portion 82 is formed on the side surface of the second bearing portion 8b, an abutting area between the inner circumferential surface 34a of the rotor 3 and the curved surface portion 82 of the second bearing portion 8b is configured of a line segment extending in the circumferential direction. As a result, the second bearing portion 8b tilts with respect to the rotor 3 in a stable state. Therefore, it is possible to align the second bearing portion 8b and to exhibit a desired bearing function without inhibiting rotation of the rotor 3.

In addition, since the first bearing portion 8a is firmly fixed to by being insert-molded into the rotor 3, the first bearing portion 8a is not separated from the rotor 3. Meanwhile, since the curved surface portion 82 of the second bearing portion 8b abuts onto the inner circumferential surface 34a of the rotor 3, the second bearing portion 8b can be mounted on the rotor 3 after insert molding of the first bearing portion 8a. As a result, it is easy to form the resin portion 5f that retreats radially outwards between the first bearing portion 8a and the second bearing portion 8b in comparison with a case where the second bearing portion 8b is subject to insert molding.

Hereinafter, other embodiments will be described with reference to drawings. The basic configuration thereof is the same as that in the above-described embodiment and thus only a difference in configuration will be described with reference to the drawings. In order to facilitate the understanding of the drawings, the description will be made using the same component names and the same reference numerals as in the above-described embodiment.

### Other Embodiment 1

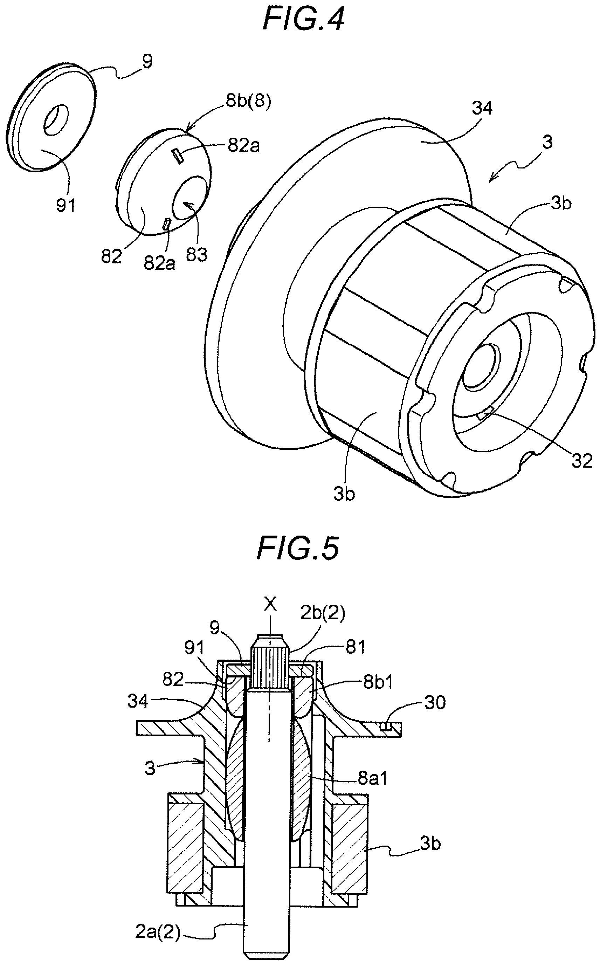

As illustrated in Fig. 5, both of a first bearing portion 8a1 and a second bearing portion 8b1 may abut onto the inner circumferential surface of the rotor 3 in a state of being able to tilt with respect to the rotation axis X of the rotor 3. In this case, since projections (not shown) formed on the first bearing portion 8a1 and the second bearing portion 8b1 engage with rotation stopping groove portions (not shown) formed on the rotor 3 as with the above-described embodiment, the first bearing portion 8a1 and the second bearing portion 8b1 integrally rotate with the rotor 3. In addition, in Other Embodiment 1, a front end portion of the first bearing portion 8a1 abuts onto a rear end portion of the second bearing portion 8b1 such that movement of the first bearing portion 8a1 in the direction along the rotation axis X is regulated. Note that, the first bearing portion 8a1 may be provided over an area illustrated in Fig. 2 such that the movement of the first bearing portion 8a1 in the direction along the rotation axis X is regulated by the resin portion 5f of the rotor 3 and there is no particular limitation.

When the first bearing portion 8a1 is configured to be able to tilt with respect to the rotor 3 in addition to the second bearing portion 8b1 as in Other embodiment 1, even in a case where the rotor 3 is inclined with respect to the shaft member 2, the first bearing portion 8a1 comes into surface contact with the shaft member 2 in a sliding manner and thus it is possible to secure a desired bearing function.

### Other Embodiment 2

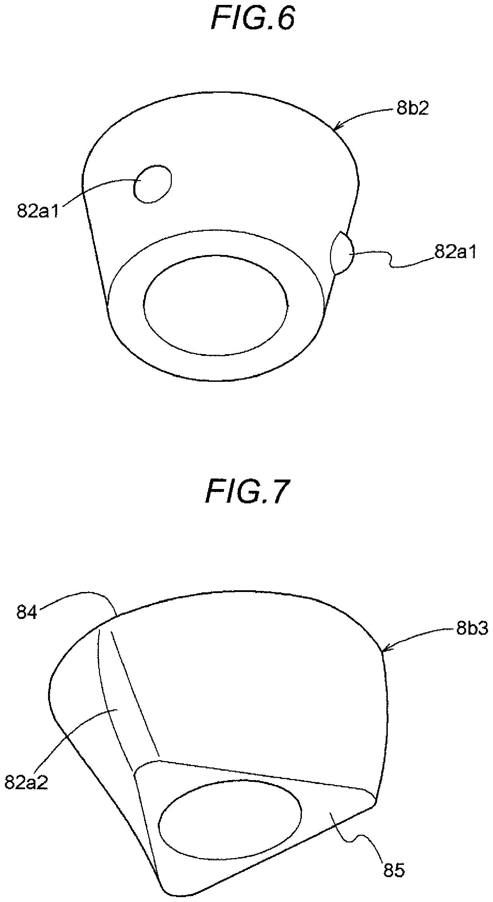

As illustrated in Fig. 6, a side surface of a second bearing portion 8b2 may be formed into a tapered shape and each rotation stopping projection 82a1 may be configured as a semi-spherical rib. In this case, it is preferable that the inner circumferential surface 34a of the tip end portion 34 of the rotor 3 onto which the side surface of the second bearing portion 8b2 abuts is formed into a curved surface. In Other Embodiment 2, since the rotation stopping projections 82a1 are configured to have a semi-spherical shape, the second bearing portion 8b2 more smoothly tilts with respect to the rotor 3.

### Other Embodiment 3

As illustrated in Fig. 7, a side surface of a second bearing portion 8b3 may be configured to be smoothly displaced from a circular bottom portion 84 to a triangular top portion 85 and rotation stopping projections 82a2 corresponding to vertexes of the triangle may be formed. When the rotation stopping projection 82a is formed as in Other Embodiment 3, it is possible to increase the rigidity of the second bearing portion 8b3.

### Other Embodiments

(1) In the above-described embodiment, any one of the side surface of the second bearing portion 8b and the inner circumferential surface 34a of the tip end portion 34 of the rotor 3 is configured as a curved surface. However, one of the side surface of the second bearing portion 8b and the inner circumferential surface 34a of the tip end portion 34 of the rotor 3 may be configured to have a planar shape instead of being configured as a curved surface. In this case, for example, the second bearing portion 8b may be configured as a tube-shaped member and the second bearing portion 8b2 may be inserted into the tip end portion 34 of the rotor 3 in a state where there is a predetermined gap to allow the second bearing portion 8b2 to tilt with respect to the rotor 3.
(2) The number of bearings 8 in the above-described embodiment is not limited to two and three or more bearings may be provided by dividing the first bearing portion 8a into two parts or the like.
(3) In the above-described embodiment, the washer 9 is configured as a separate member. However, the washer 9 may be insert-molded into the impeller housing 5 and the impeller housing 5 may be configured as a slide-contacting member. In addition, the shape of the washer 9 is not limited to a circular plane plate-like shape and may be any shape as long as the washer 9 includes the planar end surface 91 that comes into slide-contact with the plane portion 81 of the second bearing portion 8b. For example, the washer 9 may be configured to have a cylindrical shape or a conical shape in which a plane is formed as the end surface 91.
(4) The electric pump is not limited to the water pump P that circulates cooling water of an engine and may circulate engine oil and may be used for a purpose other than a vehicle. In addition, a method of driving the electric pump is not limited to a method of using a brushless motor that generates an alternating magnetic field and a brushed motor may also be used.

The disclosure can be used for an electric pump for circulating various types of fluid.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric pump (P) comprising:
a casing (1);
a shaft member (2) whose one end portion (2a) is fixed to the casing;
a first bearing portion (8a) that is disposed to an outer circumferential side of the shaft member at a position close to the one end portion of the shaft member;
a second bearing portion (8b) that is disposed to the outer circumferential side of the shaft member at a position close to the other end portion (2b) of the shaft member;
a rotor (3) that is accommodated in the casing and integrally rotates with the first bearing portion and the second bearing portion;
an impeller (4) that is fixed to the rotor at a position close to the other end portion of the shaft member;
an impeller housing (5) that is connected to the casing in a state where the other end portion of the shaft member is inserted into the impeller housing and that accommodates the impeller; and
a slide-contacting member (9) that is disposed between the impeller housing and the second bearing portion and comes into slide-contact with the second bearing portion,
wherein the second bearing portion includes an outer circumferential portion (82) that abuts onto an inner circumferential surface (34a) of the rotor in a state of being able to tilt with respect to a rotation axis (X) of the rotor and a plane portion (81) that comes into slide-contact with an end surface (91) of the slide-contacting member.

2. The electric pump according to claim 1,
wherein at least one of the inner circumferential surface of the rotor and the outer circumferential portion of the second bearing portion is configured as a curved surface.

3. The electric pump according to claim 1 or 2,
wherein the first bearing portion is configured as a bearing member that is insert-molded into the rotor using resin, and
a resin portion (5f) that is exposed between the first bearing portion and the second bearing portion is positioned radially outward of inner circumferential surfaces of the first bearing portion and the second bearing portion.

4. The electric pump according to any one of claims 1 to 3,
wherein the first bearing portion abuts onto the inner circumferential surface of the rotor in a state of being able to tilt with respect to the rotation axis of the rotor.

5. The electric pump according to any one of claims 1 to 4,
wherein a discharging groove (81a) is formed on the plane portion of the second bearing portion to extend radially outwards from the shaft member.

6. The electric pump according to any one of claims 1 to 5,
wherein a plurality of rotation stopping projections (82a) are formed on the outer circumferential portion of the second bearing portion at regular intervals in a circumferential direction of the shaft member and rotation stopping groove portions (31) that engage with the rotation stopping projections are formed on the inner circumferential surface of the rotor that abuts onto the outer circumferential portion.
